# EUROPÄISCHE PATENTSCHRIFT

(11) **EP 2 406 158 B1**
(45) Veröffentlichungstag und Bekanntmachung des Hinweises auf die Patenterteilung: **24.12.2014**
(21) Anmeldenummer: 10710650.2
(22) Anmeldetag: 05.03.2010
(51) Int. Cl.: B65G 19/22, B65G 19/24

(54) **KRATZER FÜR KETTENKRATZFÖRDERER**
SCRAPER FOR SCRAPER CHAIN CONVEYORS
RACLETTE POUR TRANSPORTEUR À CHAÎNE À RACLETTE

(30) Priorität: 10.03.2009 DE 102009003595
(43) Veröffentlichungstag der Anmeldung: 18.01.2012
(73) Patentinhaber: Caterpillar Global Mining Europe GmbH, 44534 Lünen (DE)
(72) Erfinder: FISCHER, Frank, 44534 Lünen (DE); KLINGBEIL, Willi, 59368 Werne (DE); KÖHLER, Matthias, D-44534 Lünen (DE); TILLESSEN, Uwe, 59174 Kamen (DE); WIRTZ, Jörg, 58454 Witten (DE); WIEJACK-SYMANN, Elmar, 46539 Dinslaken (DE)
(74) Vertreter: Kramer Barske Schmidtchen Patentanwälte PartG mbB
(86) Internationale Anmeldenummer: PCT/IB2010/050965
(87) Internationale Veröffentlichungsnummer: WO 2010/103446

(56) Entgegenhaltungen:
- WO-A1-2004/065270
- DE-A1- 2 353 005
- US-A- 2 094 789

## Beschreibung

Die Erfindung betrifft Kratzer für Kettenkratzförderer, mit einem Kopfsteg, an dem ein Kettenanbindungsbereich zum Anschließen des Kratzers an eine Kratzerkette ausgebildet ist, und mit Kratzerflügeln zum Führen des Kratzers an Seitenprofilen und am Boden eines Kettenkratzförderers, wobei die Kratzerflügel jeweils aus einem am metallischen Kopfsteg verankerten Halteabschnitt und einem an dem Halteabschnitt lösbar mittels Arretiermitteln befestigbaren Kunststoff-Gleiteinsatz für jeden Kratzerflügel bestehen.

Bei der Mineraliengewinnung insbesondere im untertägigen Bergbau werden Kettenkratzförderer eingesetzt, die als Einzelketten-oder Doppelkettenkratzförderer ausgebildet sein können. Gattungsgemäße Kettenkratzförderer kommen insbesondere als Strebförderer zum Einsatz, bei welchen über große Streblängen das herein gewonnene Material kontinuierlich mit den an der umlaufenden Kratzerkette befestigten Kratzern abtransportiert und auf weitere Fördereinrichtungen wie Streckenförderer, die auch aus Bandförderern bestehen können, übergeben werden muss. Ein Kettenkratzförderer weist meist an seinen beiden Enden einen Kettenantrieb auf, mit dem die endlose, in Obertrum und Untertrum umlaufende Kratzerkette mit den an ihr angeschlossenen Kratzern angetrieben wird.

Ein Kratzer für einen sogenannten Doppelmittenkettenkratzförderer mit Kratzersteg, Kettenanbindungsbereich und integral am Kratzersteg angeformten Kratzerflügeln ist aus der DE 102 25 341 C1 bekannt, auf die zur Ergänzung der vorliegenden Offenbarung verwiesen wird.

Im Stand der Technik bestehen seit langem Bestrebungen, die von den jeweiligen Antrieben in die umlaufende Kratzerkette einzuleitenden Kräfte zu minimieren, um die an den Antrieben installierten Leistungen senken oder bei gleicher Leistung höhere Mengen mit derselben Kratzerkette transportieren zu können. In der EP 1 276 685 B1 wird hierzu vorgeschlagen, die Kratzerkette und/oder die Kratzer zumindest teilweise aus einem selbstverlöschenden, schwer entflammbaren und antistatische Materialeigenschaften aufweisenden Kunststoff mit hoher mechanischer Festigkeit bestehen zu lassen. Durch den Einsatz von Kunststoff als Werkstoff für die Herstellung der Kratzerkette und/oder des Kratzers soll eine Gewichtsreduzierung des Kratzers erreicht werden, wodurch die zu installierende Antriebsleistung geringer ausgelegt werden kann bzw. ein größeres Fördervolumen bewältigt werden kann. Nach einem Ausführungsbeispiel der EP 1 276 685 B1 soll der Kratzer aus einer metallischen Hülle bestehen, deren Innenraum mit einem Kunststoff ausgefüllt ist, und nach einem anderen Ausführungsbeispiel soll der Kratzer vollständig, nach Möglichkeit auch noch die Kratzerkette, aus einem geeigneten Kunststoff hergestellt werden.

Aus der WO 2004/048234 A1 ist bekannt, den gesamten Kratzer aus Kunststoff herzustellen, wobei der Kunststoff-Kratzer mit den aus Metall bestehenden Kettengliedern einer metallischen Kratzerkette verbunden werden soll. Um eine innige Anbindung zwischen Kratzer und Kette zu erreichen, soll der vollständig aus Kunststoff bestehende Kratzer unmittelbar an den Kettengliedern der Kratzerkette angegossen werden. Nachteilig hierbei ist, dass die Herstellung der Verbindung nur Übertage erfolgen kann, weswegen für einen Austausch derartiger Kratzer die gesamte Kratzerkette von Untertage nach Übertage gebracht werden müsste. Ein Austausch einzelner Kratzer im Einbauszustand der Kratzerkette im Kettenkratzförderer ist unmöglich.

Aus der DE 23 53 005 A1 sind gattungsgemäße Kratzer für einen Einkettenförderer bekannt, bei dem eine Öse der Einfachkette zwischen dem Kopfsteg und der Oberseite eines Kettenbügels eingelegt wird, um den Kratzer mit der Einfachkette zu verbinden. Die Gleitfläche des Kratzers besteht zur Geräusch- und Verschleißminderung aus Kunststoff. Hierzu kann die Unterseite des Kettenbügels mit einer Kunststoffgleitfläche beschichtet sein, oder sie wird mit einer Kunststoffleiste versehen, die in einer quer zur Bewegungsrichtung verlaufenden, schwalbenschwanzartigen Quernut verankert ist. Ferner können die Kratzerflügelenden aus auswechselbaren Kunststoffkappen bestehen, die jeweils mittels einer Spannhülse an einem Halteabschnitt am Kopfsteg befestigt sind. Die Kunststoffkappen sind an ihrer Unterseite mit Gleitwülsten versehen.

Für Doppelmitten-Kettenkratzerförderer ist aus der WO 2004/065270 bekannt, den Kopfsteg und den Kettenbügel aus unterschiedlichen Materialien bestehen zu lassen, um das Gewicht des Kratzers zu minimieren. Als Materialien für den Kopfsteg Oberteil werden Kunststoff, Aluminium oder Keramiken vorgeschlagen, um einen möglichst leichtgewichtigen Oberteil zu erhalten. Die Kratzerenden können auch aus Endkappen bestehen, die beweglich mittels Spannhülsen und einer Nut/Federverbindung am Oberteil befestigt sind, wozu am Kopfsteg Halteabschnitte ausgebildet sind, die die Feder bilden, und in eine Horizontalnut an den Innenseiten als der Endkappen eingreifen.

Aufgabe der Erfindung ist es, Kratzer für Kettenkratzförderer zu schaffen, mit denen bei hoher Standzeit eine höhere Förderleistung bzw. eine Reduzierung der zu installierenden Antriebsleistung erreicht werden kann, und die auch einen Austausch oder Wechsel eines verschlissenen oder defekten Kratzers Untertage ermöglichen.

Diese Aufgabe wird durch einen Kratzer gemäß Patentanspruch 1 gelöst. Beim erfindungsgemäßen Kratzer weist jeder Halteabschnitt zwei voneinander um einen Zwischenraum beabstandete, metallische Seitenstege auf, wobei der Zwischenraum zur Aufnahme eines Gleitkörperansatzes an den Kunststoff-Gleiteinsätzen ausgebildet ist. Ferner ist der Zwischenraum mittels eines vorzugsweise horizontal liegenden Querschenkels in Zwischenraumabschnitte unterteilt sein, wobei jeder Zwischenraumabschnitt zur Aufnahme eines Gleitkörperansatzes am Gleiteinsatz ausgebildet ist.

Die erfindungsgemäße Lösung sieht mithin vor, den Anschlussbereich bzw. Kettenanbindungsbereich zwischen Kratzer und Kratzerkette weiterhin metallisch über den Kopfsteg zu bewirken und gleichzeitig Kunststoff-Gleiteinsätze vorzusehen, die lösbar mit Halteabschnitten am metallischen Kopfsteg verbunden werden können. Der Kopfsteg und die Halteabschnitte bilden einen metallischen Kratzerrumpf mit je nach Werkstoff höchster Festigkeit. Jeder Halteabschnitt weist zwei voneinander um einen Zwischenraum beabstandete Seitenstege auf, wobei der Zwischenraum zwischen den Seitenstegen zur Aufnahme eines Gleitkörperansatzes aus Kunststoff an den Gleiteinsätzen ausgebildet ist. Je nach Größe und Abmessung der Seitenstege, die vorzugsweise über den Kopfsteg nach unten vorspringen und insbesondere auch annähernd die maximale Höhe eines Kratzers bestimmen können, kann erreicht werden, dass das hereingewonnene Material im Wesentlichen nur mittels metallischer Flächen, nämlich dem Kopfsteg einerseits und den Seitenstegen der Halteabschnitten andererseits, bewegt wird, wohingegen die Gleiteinsätze aus dem wesentlich leichteren Kunststoff vorzugsweise nur eine Führungsfunktion für die Kratzer übernehmen und die Kontaktflächen zum Kettenkratzförderer bilden. Die Seitenstege übernehmen dann eine Schutzfunktion für die Gleiteinsätze und verhindern, zumindest weitestgehend, einen unmittelbaren Kontakt zwischen dem hereingewonnenen Material und dem Kunststoff der Gleiteinsätze.

Die Kunststoff-Gleiteinsätze können hierbei vorzugsweise vollständig die Gleit- bzw. Führungsflächen bilden, mit denen sich der jeweilige Kratzer an Seitenprofilen oder am Boden eines Kettenkratzförderers führt, Die Kunststoff-Gleiteinsätze dienen dann nicht nur als reine Füllelemente zur Gewichtsreduzierung, wie teilweise im Stand der Technik vorgeschlagen, sondern sie übernehmen auch eine Führungsfunktion, wodurch gleichzeitig der Verschleiß des Fördererbodens reduziert werden kann, da dieser im Betriebseinsatz eines Kettenkratzförderers nicht mehr mit metallischen Flächen, sondern mit Gleitflächen aus Kunststoff zusammenwirkt.

In bevorzugter Ausgestaltung sind die Halteabschnitte einstückig am Kopfsteg ausgebildet und bestehen aus demselben Material wie der Kopfsteg. Dies ermöglicht, dass Kopfsteg und Halteabschnitte aus Gussteilen, ggf. auch aus Schmiedeteilen bestehen können und eine Formgebung erhalten können, die möglichst wenige Ecken oder Kanten, sondern stattdessen fließende Übergänge erhalten kann. Kopfsteg und Halteabschnitt könnten aber auch getrennt gefertigt und miteinander verschweißt werden

Der erfindungsgemäße Grundgedanke, nämlich Kunststoff-Gleiteinsätze an einem Kratzerrumpf aus Metall zu verankern, ist im Prinzip bei nahezu sämtlichen Bauformen von Kratzern, wie sie im Stand der Technik bereits vorgeschlagen wurden, einsetzbar. Bei der insbesondere bevorzugten Ausgestaltung eines erfindungsgemäßen Kratzers ist an der Unterseite des Kopfstegs zwischen den Halteabschnitten eine Einlegetasche ausgebildet, und die Einlegetasche ist von unten mittels eines Bügels verschließbar, wodurch der Kettenanbindungsbereich zwischen Kopfstegunterseite und Bügeloberseite ausgebildet ist. Der Bügel kann vorzugsweise ebenfalls aus Metall bestehen und auf geeignete Weise durch Verschrauben, durch Verstiften, über Klemmbügel o.dgl. am Kopfsteg verankert werden. Weiter vorzugsweise können der Kopfsteg an seiner Unterseite und/oder der Bügel an seiner Oberseite mit mehreren Schenkelbetten für Schenkel von Kettengliedern einer Doppelmitten-Kratzerkette versehen sein, um eine besonders günstige Abstützung zwischen dem metallischen Kratzerrumpf einerseits und den metallischen Kettengliedern andererseits zu erreichen. Um gleichzeitig eine besonders günstige und schubfeste Verbindung zwischen Bügel und Kopfsteg zu erreichen, ist vorteilhaft, wenn die Halteabschnitte an ihren die Einlegetasche begrenzenden Rückseiten mit Nuten für den formschlüssigen Eingriff von Stegabschnitten an den freien Bügelenden des Bügels versehen sind. Es reicht dann aus, den Bügel von unten in die Einlegetasche einzuschieben, wodurch die Stegabschnitte in die Nuten einfassen und den Bügel formschlüssig in Bewegungsrichtung am metallischen Kratzerrumpf aus Kopfsteg und Halteabschnitten verankern. Die Sicherungsmittel zwischen Bügel und Kopfsteg sind dann von den jeweiligen Kräften nahezu vollständig entlastet. Wie eine derartige Verbindung zwischen Bügel und Kopfsteg mit Nuten an den Innenseiten der Kratzerflügel erfolgen kann, ist im Einzelnen in der DE 102 25 341 C1 beschrieben, auf deren Offenbarungsgehalt zur Ergänzung der vorliegenden Beschreibung Bezug genommen wird.

Bei einer Ausführungsform kann der Gleiteinsatz spangenförmig ausgebildet sein und an voneinander beabstandeten Enden von die Gleitkörperansätze bildenden, an einem Mittelteil miteinander verbundenen Spangenschenkeln mit Riegelvorsprüngen als Arretiermittel versehen sein. Die Riegelvorsprünge können dann vorzugsweise in Vertiefungen am Querschenkel einfassen und nach Art eines Schnapphakens mit Hinterschnitt am metallischen Kratzerrumpf eingerastet werden. Die Schnapphakenverbindung, die durch Ausnutzung des Verformungsvermögens des spangenförmigen Kunststoff-Gleiteinsatzes hergestellt oder gelöst werden kann, liegt aufgrund der Seitenstege im geschützten, nicht belasteten Bereich und kann insofern ohne zusätzliche Sicherungselemente einen sicheren Halt der Gleiteinsätze an den Halteabschnitten der metallischen Kratzerrümpfe bewirken. Alternativ oder zusätzlich können die Gleiteinsätze Spangenschenkel aufweisen, die mit Querbohrungen für den Durchgriff von Arretiermitteln wie z.B. Spannhülsen, Schwerspannstiften od.dgl. versehen sind. Der Gleiteinsatz kann auch spangenförmig ausgebildet sein und zwei unterschiedlich lange, an einem Mittelteil verbundene, die Gleitkörperansätze bildenden Spangenschenkel aufweisen, wobei vorzugsweise der Mittelteil mit einer Querbohrung für den Durchgriff eines Sicherungsstiftes als Arretiermitteln versehen ist.

Es versteht sich, dass sowohl eine Schnapphakenverbindung als auch eine Verbindung mittels Arretiermittel vorgesehen sein könnte. Das Arretiermittel könnte auch aus einer Befestigungsschraube o.dgl. bestehen, die unmittelbar in den Gleiteinsatz eingeschraubt wird oder die in Gewindehülsen o.dgl. einschraubbar sind, die in die entsprechenden Querbohrungen eingepresst oder eingegossen sind. Die Querbohrungen können auch von Spannbügeln oder Spannklammern durchgriffen sein oder die Sicherungselemente könnten durch Schnappverbindungen ein Lösen der Spangenschenkel relativ zu den Seitenstegen bzw. Zwischenraumabschnitten verhindern.

Bei spangenförmigen Gleiteinsätzen ist besonders vorteilhaft, wenn die Spangenschenkel der Gleiteinsätze V-förmig auseinanderlaufen, wobei der spangenförmige Gleiteinsatz mit den freien Spangenschenkelenden voran auf den Halteabschnitt aufschiebbar ist und im Montagezustand zumindest nach außen und nach unten über die Seitenstege hinausragt, damit aufgrund des Überstandes die Führungsfläche und Kontaktfläche des Kratzers mit Boden und Seitenprofilen eines Kettenkratzerförderers weitestgehend oder ausschließlich aus Oberflächenabschnitten der Gleiteinsätze bestehen kann bzw. von diesen gebildet werden kann. Der Überstand zumindest über die Seitenstege nach unten sollte mithin ausreichend sein, dass die Gleiteinsätze im Betriebseinsatz als einzige Kontaktfläche mit dem Fördererboden im Obertrum ausgebildet oder vorgesehen sind. Im Untertrum kann bereits durch die Profilierung des Untertrumbodens erreicht werden, dass der Kratzer selbst dann nur mit den Kunststoff-Gleiteinsätzen am Untertrumboden aufliegt, wenn die Deckfläche der Gleiteinsätze nach oben zwar über die Umrisslinie der Seitenstege hinausragt, aber bündig mit der Deckfläche des Kopfstegs abschließt. Die Gleiteinsätze können zusätzlich aber auch noch oben nicht nur über die Seitenstege sondern auch über die Deckfläche des Kopfstegs hinausragen. Weiter vorzugsweise können am Kopfsteg in den Zwischenraum mündende Entnahmeschrägen zum Lösen der Gleitkörperansätze aus den Zwischenräumen ausgebildet sein. Die Entnahmeschrägen haben besondere Vorteile bei einer Sicherung der Gleiteinsätze mit einer Schnapphakenverbindung, können jedoch bei allen Arretiervarianten der Gleitkörperansätze in den Zwischenräumen das Lösen der Gleiteinsätze untertage erleichtern.

Die Gleiteinsätze können vorzugsweise aus mehreren, fest miteinander verbundenen Kunststoffscheiben bestehen. Derartige Gleiteinsätze lassen sich bei hohem Freiheitsgrad für die Formgebung besonders einfach fertigen

Die Seitenstege können zu ihren Stegenden hin nach außen gewölbt verlaufen. Der Abstand zwischen den Seitenstegen und die Breite des Zwischenraums können zu den freien Stegenden hin zunehmen. Alternativ können der Abstand zwischen den Seitenstegen und die Breite des Zwischenraums konstant sein.

Die Erfindung betrifft auch die Verwendung eines Gleiteinsatzes gemäß Patentanspruch 15. Die Gleiteinsätze können unmittelbar über Schnappverbindungen oder Klebeverbindungen oder nur mittelbar mittels separater Sicherungsmittel in Zwischenräumen zwischen Seitenstegen und/oder einem Querschenkel der Halteabschnitte arretierbar sein, wodurch auf die Gleitkörperansätze und die Verbindungsbereiche zwischen Kratzer und Gleiteinsatz keine unmittelbaren Belastungen über die zu bewegenden Massen ausgeübt werden können.

Die Gleiteinsätze können im Prinzip aus jedem geeigneten Kunststoff mit ausreichender Festigkeit bestehen. Als Kunststoffe eignen sich vor allem Thermoplaste, insbesondere Polyamide wie PA6, PA12 oder PA6.6. Weiter vorteilhaft kann es sich auch um faserverstärkte Kunststoffe handeln, die beispielsweise zu 20% bis etwa 50% mit Glasfasern oder Kohlefasern oder anderen geeigneten Fasern verstärkt sind. Die Gleiteinsätze können, je nach Ausgestaltung und verwendetem Material, in einem Gussverfahren, insbesondere in einem Druckgussverfahren hergestellt sein.

Weitere Vorteile eines erfindungsgemäßen Kratzers mit auswechselbarem Gleiteinsatz ergeben sich aus der nachfolgenden Beschreibung von in der Zeichnung schematisch gezeigten bevorzugten Ausführungsbeispielen. In der Zeichnung zeigen:
**Fig. 1** schematisch einen Vertikalschnitt durch einen Rinnenschuss eines Kettenkratzförderers mit darin geführten erfindungsgemäßen Kratzern gemäß einem ersten Ausführungsbeispiel;
**Fig. 2** den Kratzer aus Fig. 1 in Einzeldarstellung, teilweise aufgebrochen;
**Fig. 3** den Kratzer aus Fig. 2 in Explosionsdarstellung:
**Fig. 4** einen erfindungsgemäßen Kratzer gemäß einem zweiten Ausführungsbeispiel in Seitenansicht, teilweise aufgebrochen;
**Fig. 5** den Kratzer aus Fig. 4 in Explosionsdarstellung:
**Fig. 6** perspektivisch einen Kratzerflügel eines erfindungsgemäßen Kratzers gemäß einem dritten Ausführungsbeispiel in Explosionsdarstellung;
**Fig. 7** einen Vertikalschnitt durch einen Halteabschnitt mit montiertem Gleiteinsatz beim Kratzer gemäß Fig. 6;
**Fig. 7A** eine Draufsicht auf einen Kratzerflügeln mit montiertem Gleiteinsatz beim Kratzer gemäß Fig. 6;
**Fig. 8** einen Kratzer, der kein Teil der Erfindung ist in Explosionsdarstellung; und
**Fig. 9** einen Vertikalschnitt durch einen Halteabschnitt eines Gleiteinsatzpaar beim Kratzer gemäß Fig. 8.

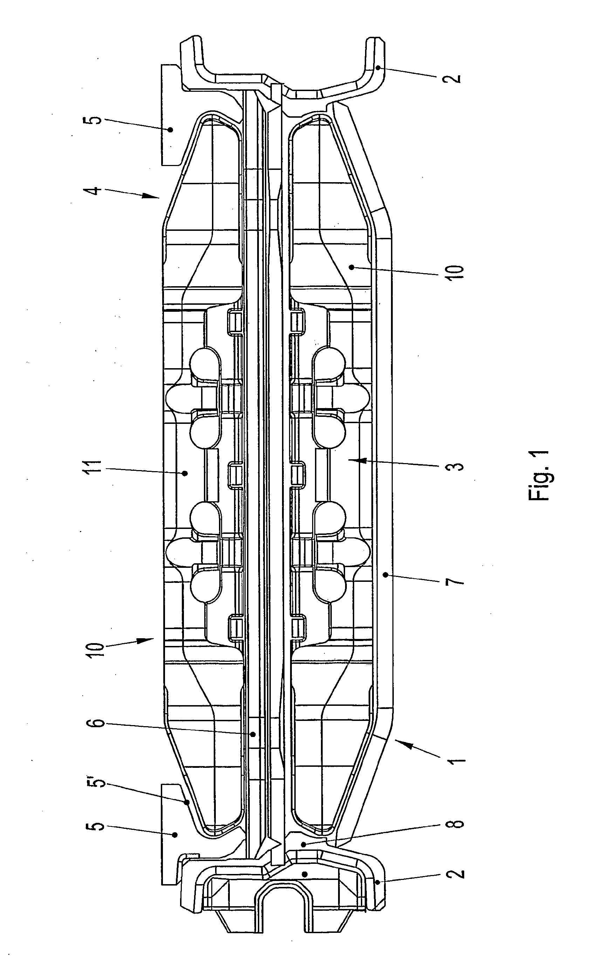

Fig. 1 zeigt einen Rinnenschuss 1 eines weiter nicht dargestellten Kettenkratzförderers, wie er insbesondere im untertägigen Bergbau zum Abtransport des mit einer Gewinnungsmaschine am Abbaustoß hereingewonnenen Minerals, wie z.B. Kohle, Erz od.dgl., zum Einsatz kommt. Ein Kettenkratzförderer besteht aus einer Vielzahl identischer, winkelbeweglich miteinander verbundener Rinnenschüsse 1 sowie an beiden Enden eines Strebs positionierten und mit den Rinnenschüssen 1 verbundenen Antrieben, um die in Fig. 1 gezeigten Kratzer 10 mit einer nicht dargestellten Kraftzerkette für den Materialabtransport umlaufen zu lassen. Jeder Rinnenschuss 1 weist in an sich bekannter Weise seitliche, im Wesentlichen über die Höhe aufragende Seitenwangen 2 auf, zwischen denen ein tiefer liegender Untertrum 3 und ein höher liegender Obertrum 4 ausgebildet sind. Der Obertrum 4 bildet den Fördertrum, in welchem mittels der Kratzer 10 das Material zu einem der beiden Strebenden transportiert wird. Sämtliche Kratzer 10 sind in der Regel untereinander identisch aufgebaut und im gezeigten Ausführungsbeispiel handelt es sich um Kratzer für einen sogenannten Doppelmittenkettenkratzförderer, da zwei Kettenstränge (nicht gezeigt) nebeneinander liegend im Obertrum 4 und Untertum 3 umlaufen und jeder Kratzer 10 an Kettengliedern beider Kratzerketten angeschlossen ist. Wie die schematische Darstellung in Fig. 1 gut erkennen lässt, werden die Kratzer 10 im Obertrum 4 mittels seitlicher Seitenprofile 5 sowie einem Fördererboden 6 geführt. Der Kratzer 10 liegt annähernd über seine gesamte Breite auf dem Fördererboden 6 auf und führt sich mit den Umfangsflächen der Kratzerenden der Kratzer 10, die hierzu eine geeignete Profilform haben, am Innenprofil 5' der Seitenprofile. Jeder Kratzer 10 durchläuft den Rücklauftrum bzw. Untertrum 3 um 180° gekippt und die Kratzer 10 liegen im Untertrum auf einem Untertrumboden 7 auf. Gleichzeitig können sie auch im Untertrum 3 seitlich mit geeigneten Profilnasen 8 z.B. an den Seitenwangen 2 geführt werden. Auf ein bis zwei Meter Kettenlänge einer Kratzerkette kommen, je nach Größe und Fördervermögen eines Kettenkratzförderers, ein bis vier Kratzer 10 zum Einsatz und gleichzeitig bestehen die nicht gezeigten Kratzerketten aus relativ schweren, metallischen Kettengliedern, so dass insgesamt mit den an den Strebenden installierten Antrieben relativ hohe Antriebsleistungen in die Kratzerkette zum Bewegen der Kratzer 10 sowie des mit diesen mitgeführten Materials eingeleitet werden müssen.

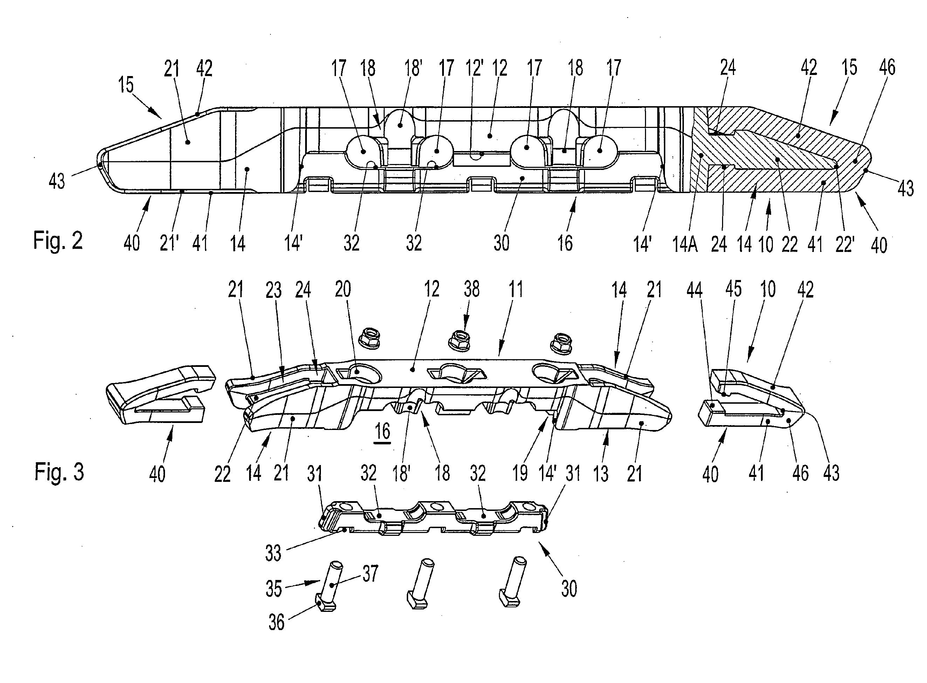

Der grundsätzliche Aufbau eines Kettenkratzförderers ist dem Fachmann bekannt. Die Erfindung betrifft insbesondere die Verwendung von vorzugsweise austauschbaren Kunststoff-Gleiteinsätzen an den erfindungsgemäßen Kratzern 10, wozu jeder Kratzer 10 einen metallischen Kratzerrumpf 11 aufweist, an welchem der Kettenanbindungsbereich mit den Kettengliedern der Kratzerkette ausgebildet ist und an dem außerdem die Kunststoff-Gleiteinsätze vorzugsweise leicht lösbar verankert werden. Dieser erfindungsgemäße Grundgedanke wird nun unter Bezugnahme auf die weiteren Figuren 2 bis 7, in denen unterschiedliche Ausführungsbeispiele für erfindungsgemäße Kratzer dargestellt sind, erläutert.

In den Fig. 2 und 3 ist der Kratzern 10 gemäß Fig. 1 im Einzelnen dargestellt. Der metallische Kratzerrumpf 11, der hier aus einem Gussteil besteht, umfasst als wesentliche Bestandteile einen Kopfsteg 12, dessen Unterseite die eine Hälfte des Kettenanbindungsbereiches 13 bildet, sowie zwei seitliche, integral mit dem Kopfsteg 12 verbundene Halteabschnitte 14 für die lösbare Befestigung von Kunststoff-Gleiteinsätzen 40 am Kratzerrumpf 11. Im Montagezustand des Kratzers 10, wie in Fig. 2 gezeigt, bilden Teilabschnitte der Halteabschnitte 14 zusammen mit den Gleiteinsätzen 40 Kratzerflügel 15 der Kratzer 10.

Es wird nun zuerst der Aufbau des metallischen Kratzerrumpfes 11 sowie die Befestigung von metallischen, ösenartigen Kettengliedern einer weiter nicht dargestellten metallischen Doppelmittenkratzerkette am Kratzerrumpf 11 beschrieben. Wie die Fig. 2 und 3 gut erkennen lassen, hat der Kopfsteg 12 etwa die halbe Höhe wie die Kratzerflügel 15 bzw. die Halteabschnitte 14. Unterhalb des Kopfstegs 12 ist eine Einlegetasche 16 ausgebildet, in welche ein Bügel 30 als demontierbares Unterstück für den Kettenanbindungsbereich 13 einsetzbar ist. Die Unterseite 12' des Kopfstegs 12 ist hier mit vier Schenkelbetten 17 für die Gliederschenkel von nicht gezeigten horizontalen Kettengliedern der Kratzerkette versehen und jeweils zwischen den benachbarten Kettengliedbetten 17 eines horizontalen Kettengliedes ist ein nach unten über die Unterseite 12' des Kopfstegs 12 vorspringender Zapfen 18 ausgebildet, der im Montagezustand des Kratzers 10 an einer Kratzerkette in die Ösenöffnung eines eingelegten horizontalen Kettengliedes eintaucht. Der Zapfen 18 ist an seinen in Förderrichtung weisenden Stirnseiten mit einer Muldung 18' versehen, damit sich die gerundeten Kettenbüge von die horizontalen Kettenglieder verbindenden vertikalen Kettenglieder (nicht gezeigt) an den Zapfen 18 bei guter Relativbeweglichkeit anlegen können. Die Halteabschnitte 14 weisen Rückseiten 14' auf, welche die Einlegetasche 16 für den Bügel 30 seitlich begrenzen. An den Innenseiten 14' sind, wie aus Fig. 3 zu erkennen ist, vertikal verlaufende Nuten 19 ausgebildet, in welche T-förmige Stegabschnitte 31 an den freien Enden des Bügels 30 im Montagezustand eintauchen können, um den Bügel 30 in Bewegungsrichtung relativ zum Kratzerrumpf 11 formschlüssig festzulegen. Der Bügel 30 weist gleichzeitig an seiner Oberseite wiederum Schenkelbetten 32 auf, die jeweils den Schenkelbetten 17 am Kopfsteg 12 gegenüberliegen. Die Befestigung des Bügels 30 am Kopfsteg 12 des Kratzerrumpfes 11 erfolgt im gezeigten Ausführungsbeispiel über drei Hammerkopfschrauben 35, die mit ihren Hammerköpfen 36 in Aussparungen 33 an der Unterseite des Bügels 30 einfassen und mit ihrem Gewindeschaft 37 zugehörige Bohrungen 34 im Bügel 30 sowie im Kopfsteg 12 durchfassen. Auf das freie Ende des Gewindeschaftes 37 kann jeweils eine Befestigungsmutter 38 aufgeschraubt werden, die im Montagezustand jeweils in ein Senkloch 20 an der Oberseite des Kopfstegs 12 einfasst und im angezogenen Zustand verdeckt und insofern geschützt im Senkloch 20 liegt. Da vorzugsweise Bügel 30 und Kratzerrumpf 11 aus einem geeigneten Metall wie insbesondere Stahl bestehen, kann mit Kratzerrumpf 11 und Bügel 30 eine äußerst stabile, innige Verbindung zwischen Kratzer 10 einerseits und Kratzerkette (nicht dargestellt) andererseits erreicht werden, die selbst den Anforderungen an Hochleistungsförderern genügt.

Der Kratzer 10 ist insgesamt zu einer Mittelebene symmetrisch ausgebildet und hat keine bevorzugte Bewegungsrichtung. Der erfindungsgemäße Kratzer 10 erhält eine Gewichtsreduzierung und ein verbessertes Laufverhalten insbesondere durch die Gleiteinsätze 40, die lösbar an den Halteabschnitten 14 montiert sind, um mit Halteabschnitt 14 einerseits und Gleiteinsatz 40 andererseits einen Kratzerflügel 15 zu bilden. Der sich über die maximale Höhe des Kratzerrumpfes 11 erstreckende Halteabschnitt 14 weist zwei voneinander beabstandete, hier auch Schutzplatten bildende und integral vom Kopfsteg 12 ausgehende Seitenstege 21 auf, die zu den freien Enden hin nach außen gekrümmt sind, damit der Kratzerflügel 15 an den Kratzerflügelenden die größte Breite aufweist und durch die Wölbung ein besseres Mitnahmeverhalten für mit den Kratzern 10 mitgeführtes Material erreicht wird. Zwischen beiden Seitenstegen 21 verläuft ein Querschenkel 22, der hier wie eine hinterschnittene Pfeilspitze ausgebildet ist und sich zu seiner Spitze 22' hin verjüngt. Jeweils oberhalb und unterhalb des Querschenkels 22 ist ein Zwischenraumabschnitt 23 ausgebildet, der zur Montage und geschützten Positionierung des hier spangenförmigen Gleiteinsatzes 40 dient. Wie der Aufbruch in Fig. 2 gut erkennen lässt, ist im Anbindungsbereich zwischen dem Querschenkel 22 und dem Basisabschnitt 14A der Halteabschnitte 14 jeweils eine Mulde 24 ausgebildet, um die spangenförmigen Gleiteinsätze 40 über eine Schnappverbindung bzw. Schnapphakenverbindung am entsprechend hinterschnittenen Querschenkel 22 des Halteabschnitts 14 zu verankern. Der spangenförmige Gleiteinsatz 40 gemäß dem Ausführungsbeispiel in Fig. 2 und 3 besteht aus einem geeigneten Kunststoff wie beispielsweise einem Polyamid mit ausreichend Formänderungsvermögen, damit der beim Aufschlagen auf die Halteabschnitte 14 geringfügig geweitet werden kann. Der spangeförmige Gleiteinsatz 40 weist einen unteren Spangenschenkel 41 und einen oberen Spangenschenkel 42 auf, die an einem Mittelteil 46 verbunden sind und deren Abstand sich vom Scheitel 43 am Mittelteil 46 des Gleiteinsatzes 40 aus erweitert. Der Gleiteinsatz 40 hat im Bereich des Scheitels 43 am Mittelteil 46 die größte Breite und ist im Bereich des Scheitels 43 bzw. Mittelteils 46 profiliert. Während der untere Spangenschenkel 41 annähernd horizontal verläuft und zum Scheitel hin nur in seiner Breite zunimmt, verläuft der obere Spangenschenkel 42 schräg, so dass sich der Abstand zwischen den Spangenschenkeln 41, 42 zu den freien, vom Scheitel 43 entfernt liegenden Enden der Spangenschenkel 41, 42 hin kontinuierlich erweitert. Für die Schnapphakenverbindung sind jeweils an den einander zugewandten Flächen der freien Enden der Spangenschenkel 41, 42 Arretiernasen 44 bzw. 45 als Gleitkörperansätze ausgebildet, die im Montagezustand, wie Fig. 2 zeigt, in die Mulden 24 einfassen. Das Montieren der Gleiteinsätze 40 an den Kratzerrümpfen 11 erfolgt von der Seite, d.h. quer zur Bewegungsrichtung der Kratzer bzw. einer Kratzerkette durch Aufschieben, insbesondere Aufschlagen der aus Kunststoff bestehenden Gleiteinsätze 40 in die Zwischenraumabschnitte zwischen den Seitenstegen 21. Für die Montage des Gleiteinsatzes 40 wird das Formänderungsvermögen des Kunststoffes ausgenutzt, bis die Gleitkörperansätze 44, 45 in die Mulden 24 am Querschenkel 22 einrasten. Der Gleiteinsatz 40 füllt im Montagezustand den Zwischenraum 23 zwischen den Seitenstegen 21 vollständig aus. Gleichzeitig ragen die Oberseite des oberen Spangenschenkels 42, die Unterseite des unteren Spangenschenkels 41 und die Außenfläche am Schenkel 43 geringfügig über die Umfangsflächen 21' der Seitenstege 21 hinaus, wodurch die Kratzer 10 im Bereich der Kratzerflügel 15 im Wesentlichen ausschließlich über die Gleiteinsätze 40 am Fördererboden (6, Fig. 1) bzw. an den Innenseiten der Seitenprofile (5 in Fig. 1) anliegen. Die Gleiteinsätze 40 bewirken daher nicht nur eine erhebliche Gewichtsminimierung aufgrund des Ersatzes von metallischen Bereiche der Kratzerflügel durch Kunststoff, sondern sie sorgen zugleich auch für ein besseres Laufverhalten und für einen geringeren Verschleiß an den fördererseitigen Führungsabschnitten (Fördererboden, Seitenprofil) des Kettenkratzförderers. Die Gleiteinsätze 40 können relativ einfach demontiert werden, indem beispielsweise einer der Spangenschenkel durchgetrennt wird und anschließend der insofern zerstörte Gleiteinsatz entnommen wird. Anschließend kann mit geringem Aufwand ein neuer Gleiteinsatz montiert werden. Die Demontage könnte allerdings auch durch eine Aushebeschräge o.dgl. unterstützt werden, die vorzugsweise in den oberen Zwischenraum 23 zwischen den Seitenstegen 21 mündet.

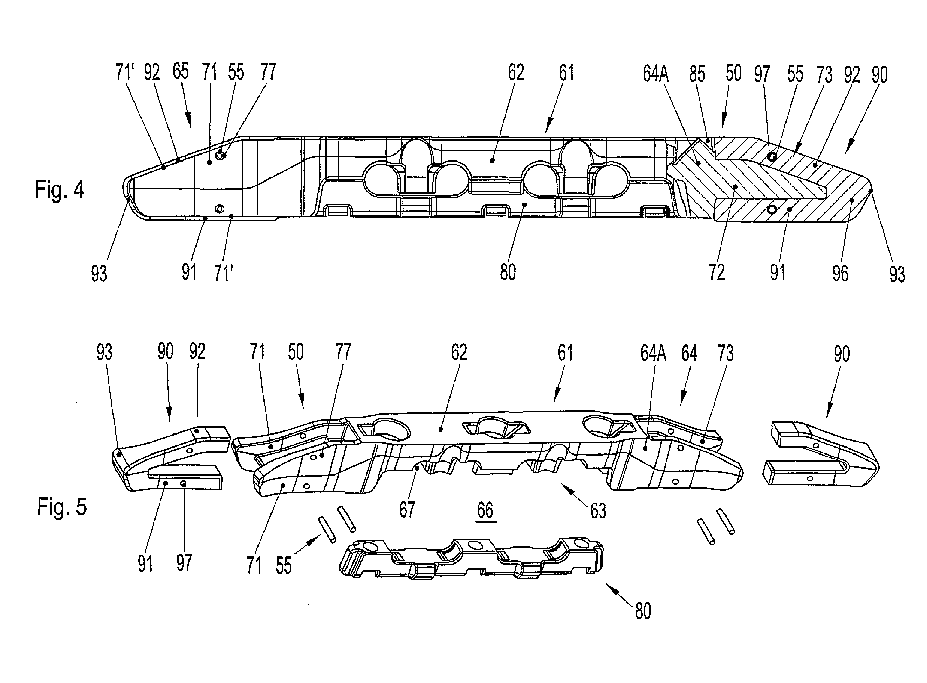

Die Fig. 4 und 5 zeigen ein zweites Ausführungsbeispiel für einen erfindungsgemäßen Kratzer 50, bei welchem sowohl der metallische Kratzerrumpf 61 einschließlich des Bügels 80 sowie der Gleiteinsätze 90 quasi den identischen Aufbau wie beim vorherigen Ausführungsbeispiel aufweisen. Auch der Kratzerrumpf 61 weist einen Kopfsteg 62 auf, an dessen Unterseite Schenkelbetten 67 ausgebildet sind und der mit seiner Unterseite den einen Abschnitt des Kettenanbindungsbereiches 63 bildet. Auch hier ist ein Bügel 80 in eine Einlegetasche 66 einsetzbar, um horizontale Kettenglieder zwischen Bügel 80 einerseits und Kopfsteg 62 andererseits zu verankern. Der Bügel 80 hat an seinen Enden Stegabschnitte, die in Nuten an den Rückseiten der Basisabschnitte 64A der Halteabschnitte 64 einfassen, um den Bügel 80 in Bewegungsrichtung festzulegen, damit mit den hier nicht gezeigten Befestigungsmitteln nur der Bügel 80 gegen Lösen vom Kratzerrumpf 61 gesichert werden muss. Auch die Gleiteinsätze 90 sind, wie beim vorherigen Ausführungsbeispiel, stangenförmig aufgebaut und weisen einen unteren, im Wesentlichen gradlinig verlaufenden Spangenschenkel 91 und einen schräg hierzu verlaufenden oberen Spangenschenkel 92 auf, die spitz am einem Mittelteil 96 zu einem Scheitel 93 zusammenlaufen, an welchem die Gleiteinsätze 90 die größte Breitenabmessung aufweisen. Die lösbare Befestigung der spangenförmigen Gleiteinsätze 90 im Zwischenraum 73 zwischen den Seitenstegen 71 der Halteabschnitte 64 erfolgt hier jedoch nicht über eine Spannhakenverbindung, sondern mittels einfacher Spannstifte bzw. Steckhülsen 55, für deren Montage in den Seitenstegen 71 fluchtende Steckbohrungen 77 und in den Spangenschenkeln 91, 92 jeweils Steckbohrungen 97 vorgesehen sind. Im Montagezustand durchfasst, wie Fig. 4 gut erkennen lässt, der Spannstift 55 jeweils sowohl die metallischen Seitenstege 71 in den Bohrungen 77 als auch die Bohrungen 97 in den Spangenschenkeln 91, 92. Zum Lösen müssen mithin nur die Steckhülsen 55 aus den Bohrungen 77, 97 herausgeschlagen werden, um anschließend die spangenförmigen Gleiteinsätze 90 aus den Teilzwischenräumen 73 herauszuhebeln und von dem hier nicht hinterschnittenen Querschenkeln 72 herunterzuziehen. Fig. 4 lässt deutlich gut erkennen, dass auch beim Kratzer 50 im Montagezustand die Spangenschenkel 91, 92 und der Scheitel 93 über die Umfangskante 71' der Seitenstege 71 nach unten, seitlich und nach oben hinausragen, damit die Führung der Kratzer 50 im Bereich der Kratzerflügel 65 ausschließlich über die Hüllflächen der Gleiteinsätze 90, und insofern nicht über Metall, bewirkt wird. Der Überstand der unteren Spangeschenkel nach unten über die Umrisslinie 71' der Seitenstege 71 hinaus ist derart bemessen, dass die Gleiteinsätze 90 mit ihren unteren Spangenschenkeln 91 die einzige Auflagefläche bzw. Kontaktfläche mit einem Fördererboden (vgl. Fig.1) bilden können, mithin der Kratzer im Ober- oder Fördertrum nur mit dem Kunststoffgleiteinsatz in Kontakt mit dem Kettenkratzförderer kommt, also ein metallischer Kontakt zwischen Kratzer und Kettenkratzförderer vollständig oder weitestgehend vermeiden wird. Auch die Gleiteinsätze 90 könnten zusätzlich mittels einer Spannhakenverbindung gesichert werden und/oder der Querschenkel könnte entweder als dünnes Band ausgeführt sein oder vollständig entfallen, um das Gewicht der Kratzer weiter zu reduzieren. In Fig. 4 fluchtet die untere Umrisslinie 71' der Seitenstege mit der Unterseite des Kratzerrumpfes. Die untere Umrisslinie könnte auch, wie beim vorherigen Ausführungsbeispiel, mit einem Rücksprung versehen sein. Die Demontage beider Gleiteinsätze 90 wird durch eine Aushebeschräge 85 unterstützt, die vom Kopfsteg 62 her in den oberen Zwischenraum 73 zwischen den Seitenstegen 71 mündet und in die ein Lösewerkzeug wie ein Hebel eingeschoben werden kann, um die Gleiteinsätze 90 durch Druck auf die Stirnenden der oberen Spangenschenkel 91 nach außen, mithin von den Querschenkeln 72 herunter, zu schieben.

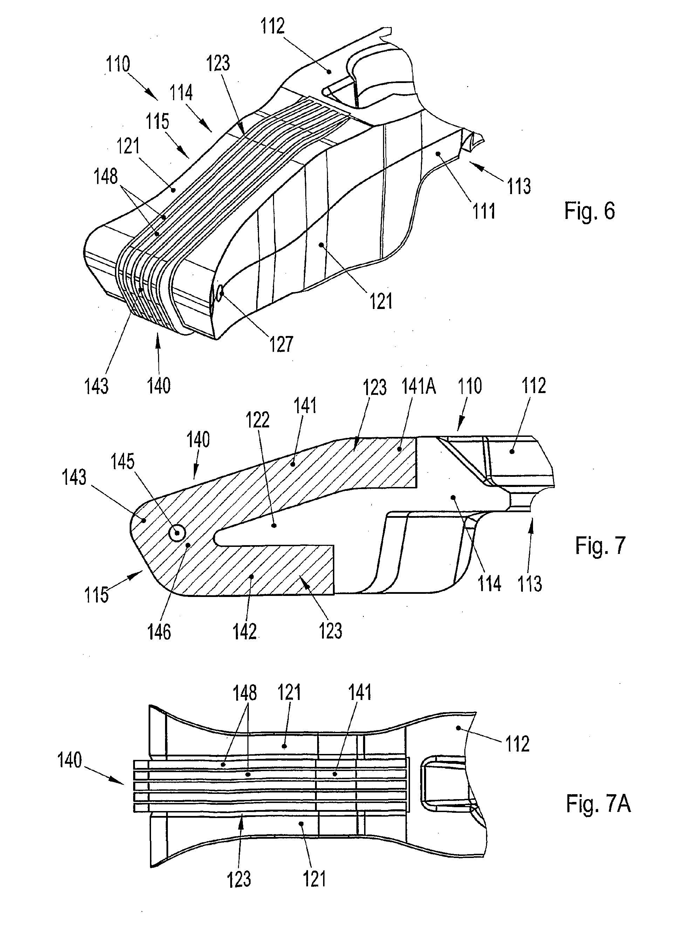

Die Fig. 6, 7 und 7A zeigen ein drittes Ausführungsbeispiel für einen erfindungsgemäßen Kratzer 110. Die Figuren zeigen nur den kratzerflügelseitigen Endbereich des Kopfstegs 112 des Kratzerrumpfes 111. Der Kettenanbindungsbereich 113 und der Bügel (nicht gezeigt) sind identisch wie bei den vorherigen beiden Ausführungsbeispielen ausgebildet, so dass auf die dortige Beschreibung zur Vermeidung von Wiederholungen verwiesen wird. Beim Kratzer 110 weisen die Halteabschnitte 114 zwar wiederum zwei über Zwischenraumabschnitte 123 voneinander beabstandete Seitenstege 121 auf, zwischen denen ein Querschenkel 122 ausgebildet ist, und die Seitenstege 121 erstrecken sich wiederum zu beiden Seiten der Zwischenräume 123 bis annähernd zu den Außenenden der Kratzerflügel 115 hin. Die Zwischenräume 123 sind mit einem stangenförmigen Kunststoff-Gleiteinsatz 140 ausgefüllt, der entlang der Hüllkontur der Zwischenraumabschnitte 123 oben und unten über die Seitenstege hinausragt und auch am Flügelende über den Seitensteg nach außen hin vorspringt, damit die Kontaktfläche des Kratzers 110 mit dem Rinnenschuss möglichst ausschließlich mittels der Kunststoffoberfläche des Gleiteinsatzes 140 gebildet wird. Beim Kratzer 110 erweitern sich die Seitenstege 121 zu den freien Stegenden hin, indem die Außenseiten entsprechend gewölbt profiliert verlaufen, wie vor allem Fig. 7A gut erkennen lässt. Die Seitenstege 121 bilden hierbei in Bewegungsrichtung des Kratzers 110 Schutzplatten für die die Zwischenraumabschnitte ausfüllenden, im Querschnitt quadratischen oder rechteckigen Spangenschenkel 141, 142 des Gleiteinsatzes 140 einschließlich des die Spangenschenkel 141, 142 miteinander verbindenden Mittelteils 146, während der Scheitel 143 des Mittelteils 146 seitlich über die Seitenstege 121 hinausragt. Die Krümmung der Seitenstege 121 verbessert zugleich das Mitnahmeverhalten der Kratzer 110, wobei im Wesentlichen nur das metallische Material der Seitenstege 121 in Kontakt mit dem zu fördernden Material wie Bruchgestein, Kohle oder Erz kommt.

Wie Fig. 7 zeigt, sind die Spangenschenkel 141, 142 ungleich lang und der obere Spangenschenkel 141 ist länger als der untere Spangenschenkel 142. Der untere Spangenschenkel 142 verläuft über seine gesamte Länge gerade, während der obere Spangenschenkel 141, zur Ausbildung eines etwa V-förmigen Gleiteinsatzes 140, sich schräg vom Mittelteil 146 aus erstreckt und erst an seinem innenliegenden Ende in einen parallel zum unteren Spangenschenkel 142 verlaufenden Schenkelabschnitt 141A übergeht. Der Gleiteinsatz 140 hat über seine gesamte Länge eine konstante Breite, d.h. ist hier am Scheitel 143 genau so breit wie an den innenliegenden Endabschnitten 141A der Spangenschenkel 141, 142. Entsprechend ist auch der Abstand zwischen den die Zwischenraumabschnitte 123 begrenzenden Innenseiten der Seitenstege 121 konstant. Der Gleiteinsatz kann daher hier aus einzelnen, miteinander z.B. verklebten Kunststoffscheiben 148 bestehen, wobei zwischen einzelnen Kunststoffscheiben auch Stabilisierungslagen angeordnet werden könnten. Die Kunststoffscheiben könnten jeweils z.B. aus Polyamid bestehen.

Der Gleiteinsatz 140 kann im Wesentlichen lose von den Flügelenden her auf die Halteabschnitte 114 aufgeschoben werden, wobei der obere Spangenschenkel 141 in den oberen Zwischenraum 123 und der untere Spangenschenkel 141 in den unteren Zwischenraum 123 hineingeschoben wird. Im Mittelteil 146 weist der Gleiteinsatz 140 eine horizontal bzw. in Bewegungsrichtung verlaufende Querbohrung 145 auf, in die im Montagezustand eine Steckhülse einfasst, die über Bohrungen 127 in den Seitenstegen 121 montiert wird. Die Steckhülse kann das einzige Arretiermittel für den Gleiteinsatz bilden. Der Gleiteinsatz kann jedoch auch mit Verformungsspannung am spatenförmigen Querschenkel 122 angeklemmt sein und/oder in den Zwischenräumen 123 eingeklebt sein.

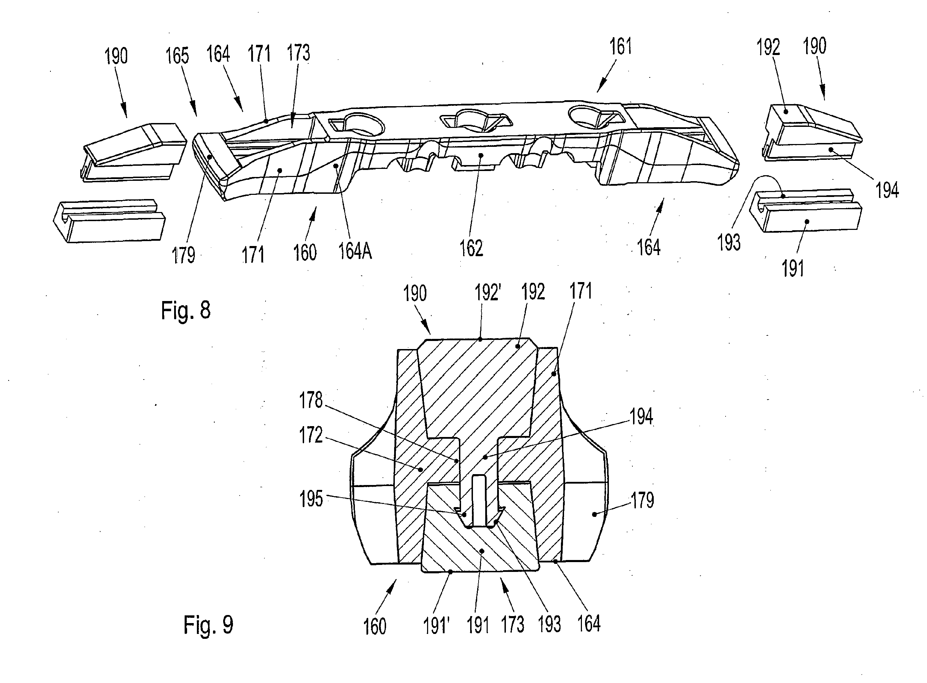

Die Fig. 8 und 9 zeigen einen Kratzer 160, der kein Teil der Erfindung ist. Der Kopfsteg 162 des metallischen Kratzerrumpfes 161 ist wiederum identisch wie bei den vorherigen Ausführungsbeispielen ausgebildet, so dass auf die dortige Beschreibung verwiesen wird. Die Befestigung des Kratzers 160 an einer nicht gezeigten Kratzerkette erfolgt über einen identischen Bügel wie bei den vorherigen Ausführungsbeispielen, weswegen der Bügel in den Fig. 8 und 9 weggelassen ist. Der Kratzerrumpf 161 besteht wiederum vorzugsweise aus einem metallischen Gussteil mit integral am Kopfsteg 162 angeformten Halteabschnitten 164, um mit diesen sowie an ihnen befestigten Gleiteinsätzen 190 Kratzerflügel 165 zu bilden, bei denen die Führung zwischen Kettenkratzförderer und Kratzer 160 weitestgehend über Außenflächen der Gleiteinsätze 190 erfolgt. Anders als bei den vorherigen Ausführungsbeispielen wird beim Kratzer 160 allerdings auch das Flügelende der Kratzerflügel 165 aus einem metallischen Abschnitt des Kratzerrumpfes 161 gebildet und die Seitenstege 171, die sich mit Abstand unter Ausbildung eines Zwischenraums 173 nach außen erstrecken, sind über einen Quersteg 179 miteinander verbunden, der die äußere Hüllfläche der Kratzerflügel 165 bildet und zu diesem Zweck an seiner Außenseite entsprechend der gewünschten Profilform der Kratzerflügel 165 profiliert ist. Der Kratzer 160 führt sich im Betriebseinsatz an den Innenseiten der Führungsprofile eines Kettenkratzförderers daher mit dem metallischen Quersteg 179 des Halteabschnitts 164. Die Seitenstege 171, der Basisabschnitt 164A und der Quersteg 179 begrenzen einen kastenförmigen Zwischenraum 173, in dem ein zweiteiliges Gleiteinsatzpaar 190 aus Kunststoffteilen lösbar verankert werden kann. Das Gleiteinsatzpaar 190 besteht aus einem Unterteil 191 aus Kunststoff mit hier annähernd U-förmigem Querschnitt und einem Oberteil 192 mit hier annähernd T-förmigem Querschnitt, die mittels einer Nut-Federverbindung zusammensteckbar und aneinander befestigbar sind. Eine vorzugsweise schwalbenschwanzförmig ausgebildete Nut 193 im Unterteil 191 nimmt einen nach unten am Oberteil 192 vorspringenden Klemmsteg 194 auf, dessen freies Ende als hinterschnittener Keilsteg 195 ausgebildet ist, der sich in die Nut 193 einschieben lässt und dort Unterteil 191 und Oberteil 192 gegen Lösen sichert. Der Oberteil 192 verjüngt sich nach außen in Anpassung an die Profilform der Halteabschnitte 164 im Bereich der Kratzerflügel 165. Um Unterteil 191 und Oberteil 192 des Gleiteinsatzpaares 190 im Zwischenraum 173 zwischen den Seitenstegen in Vertikalrichtung zu verankern, springen über die Innenseiten der Seitenstege 171 jeweils ein Klemmschenkel 172 vor, der den Zwischenraum 173 in zwei Zwischenraumabschnitte unterteilt, die nur über einen Spalt 178 zwischen den Klemmschenkeln 172 miteinander verbunden sind. Der Klemmsteg 194 am Oberteil 192 des Gleiteinsatzpaares 190 durchfasst im Montagezustand den Spalt 178. Fig. 9 lässt gut erkennen, dass die Unterfläche 191' des Unterteils 191 nach unten über die metallische Hüllfläche der Halteabschnitte 164 einschließlich des massiven, profilierten und sich nach außen verbreiternden Querstegs 179 übersteht und auch das Oberteil 192 mit seiner Oberseite 192' den Halteabschnitt 164 nach oben überragt, damit der Kratzer zumindest auf dem Fördererboden bzw. dem Untertrumboden der Kratzer 160 über die freiliegenden Hüllflächen des aus Kunststoff bestehenden Gleiteinsatzpaares 190 geführt wird.

Für den Fachmann ergeben sich aus der vorhergehenden Beschreibung zahlreiche Modifikationen, die in den Schutzbereich der anhängenden Ansprüche fallen sollen. Die Ausführungsbeispiele zeigen eine Verbindung von Kunststoff-Gleiteinsätzen bzw. Gleitköpfen und metallischen Halteabschnitten am Kratzerrumpf über einen Schnappverschluss, über Spannstifte sowie über eine Steckverbindung. Zusätzlich oder alternativ könnten die Gleiteinsätze mit den Halteabschnitten auch über eine Spannstiftverbindung gesichert sein oder mittels einer Schraubverbindung festgelegt sein. Für die Schraubverbindung könnten in die Kunststoff-Gleiteinsätze beispielsweise gewindete Metallhülsen eingepresst oder eingegossen sein, in die entsprechende Befestigungsschrauben einfassen. Es könnten auch mehrere dieser Befestigungsarten miteinander kombiniert werden, um eine besonders sichere Verbindung zwischen den Gleiteinsätzen aus Kunststoff einerseits und den metallischen Kratzerrümpfen andererseits zu erreichen. Die Gleiteinsätze könnten aus unterschiedlichen Kunststoffen bestehen. Als Kunststoff eignen sich z.B. Thermoplaste wie insbesondere Polyamide. Als zusätzlichen Verschleißschutz könnten die Gleiteinsätze mit Fasern wie Glas- oder Kohlefasern verstärkt sein. Die Faserverstärkungen oder andere Verstärkungseinlagen können ggf. nur in den Randschichten der Gleiteinsätze vorgesehen werden. Bei den einzelnen Ausführungsbeispielen könnten die metallischen Bereiche insbesondere im Bereich der Querschenkel und der Seitenstege schmaler ausfallen, um entsprechend größer dimensionierte Gleiteinsätze, die den entstandenen Zwischenraum vorzugsweise vollständig ausfüllen, zu verwenden und hierdurch das Gewicht der Hybrid-Kratzer zusätzlich abzusenken. Die Größe und Ausdehnung der Seitenstege kann variiert werden, um in Bewegungsrichtung quasi vollflächig das zu bewegende Material nur in Kontakt mit dem metallischen Kratzerrumpf kommen zu lassen, während die Gleiteinsätze nur die Kontakt- und Auflageflächen auf Fördererboden, Untertrumboden und ggf. in den Seitenprofilen bilden und gleichzeitig die Halteansätze der Gleitstücke innerhalb der Zwischenräume gegen Belastungen schützen. Die in den einzelnen Ausführungsbeispielen gezeigten Arretiervarianten könnten auch miteinander kombiniert werden. Die Erfindung ist daher nicht auf die gezeigten Ausführungsbeispiele beschränkt.

## Patentansprüche

1. Kratzer für Kettenkratzförderer, mit einem Kopfsteg (12; 62; 112; 162), an dem ein Kettenanbindungsbereich zum Anschließen des Kratzers an eine Kratzerkette ausgebildet ist, und mit Kratzerflügeln (15; 65; 115; 165) zum Führen des Kratzers an Seitenprofilen und Boden eines Kettenkratzförderers, wobei die Kratzerflügel (15; 65; 115; 165) aus einem am metallischen Kopfsteg verankerten Halteabschnitt (14; 64; 114; 164) und einem an dem Halteabschnitt (14; 64; 114; 164) lösbar mittels Arretiermitteln befestigbaren Kunststoff-Gleiteinsatz (40; 90; 140; 190) für jeden Kratzerflügel (15; 65; 115; 165) bestehen, **dadurch gekennzeichnet, dass** jeder Halteabschnitt (14; 64; 114) zwei voneinander um einen Zwischenraum (23; 73; 123; 173) beabstandete, metallische Seitenstege (21; 71; 121; 171) aufweist, wobei der Zwischenraum (23; 73; 123) mittels eines Querschenkels (22; 72; 122) in Zwischenraumabschnitte unterteilt ist und jeder Zwischenraumabschnitt zur Aufnahme eines Gleitkörperansatzes an den Gleiteinsätzen (40; 90; 140) ausgebildet ist.

2. Kratzer nach Anspruch 1, **dadurch gekennzeichnet, dass**, die Halteabschnitte (14; 64; 114; 164) einstückig am Kopfsteg (12; 62; 112; 162) ausgebildet sind und aus demselben Material wie der Kopfsteg bestehen.

3. Kratzer nach Anspruch 1 oder 2, **dadurch gekennzeichnet, dass** zwischen den Halteabschnitten (14; 64; 114; 164) an der Unterseite des Kopfstegs (12; 62; 112; 162) eine Einlegetasche (16) ausgebildet ist, und dass die Einlegetasche (16) von unten mittels eines Bügels (30; 80) verschließbar ist, wobei der Kettenanbindungsbereich (13; 113) zwischen Kopfstegunterseite und Bügeloberseite ausgebildet ist.

4. Kratzer nach Anspruch 3, **dadurch gekennzeichnet, dass** die Halteabschnitte (14; 64) an ihren die Einlegetasche (16) begrenzenden Rückseiten (14') mit Nuten (19) für den formschlüssigen Eingriff von Stegabschnitten (31) an den freien Bügelenden des Bügels (30) versehen sind.

5. Kratzer nach einem der Ansprüche 1 bis 4, **dadurch gekennzeichnet dass** der Gleiteinsatz (40) spangenförmig ausgebildet ist und an voneinander beabstandeten Enden von die Gleitkörperansätze bildenden, an einem Mittelteil (46) verbundenen Spangenschenkeln (41, 42) mit Riegelvorsprüngen (44, 45) als Arretiermittel versehen ist.

6. Kratzer nach einem der Ansprüche 1 bis 5, **dadurch gekennzeichnet, dass** der Gleiteinsatz (90) spangenförmig ausgebildet ist und zwei die Gleitkörperansätze bildende, an einem Mittelteil (96) verbundene Spangenschenkel (91, 92) aufweist, die mit Querbohrungen (97) für den Durchgriff von Sicherungsstiften als Arretiermittel versehen sind.

7. Kratzer nach einem Ansprüche 1 bis 6, **dadurch gekennzeichnet, dass** der Gleiteinsatz (140) spangenförmig ausgebildet ist und zwei unterschiedlich lange, an einem Mittelteil (146) verbundene, die Gleitkörperansätze bildende Spangenschenkel (141, 142) aufweist, wobei vorzugsweise der Mittelteil (146) mit einer Querbohrung (145) für den Durchgriff eines Sicherungsstiftes als Arretiermittel versehen ist.

8. Kratzer nach einem der Ansprüche 1 bis 7, **dadurch gekennzeichnet, dass** die Spangenschenkel der Gleiteinsätze (40; 90; 140) V-förmig auseinanderlaufen, wobei der spangenförmigen Gleitensatz (40; 90; 140) mit den freien Spangenschenkelenden voran auf den Halteabschnitt (14; 64; 114) aufschiebbar ist und im Montagezustand zumindest nach außen und nach unten über die Seitenstege (21; 71; 121) hinausragt.

9. Kratzer nach Anspruch 8, **dadurch gekennzeichnet, dass** der Überstand zumindest über die Seitenstege (71) nach unten ausreichend ist, dass die Gleiteinsätze (40; 90) im Betriebseinsatz als einzige Kontaktfläche der Kratzerflügel mit dem Fördererboden (6) ausgebildet oder vorgesehen sind.

10. Kratzer nach einem der Ansprüche 1 bis 9, **dadurch gekennzeichnet, dass** am Kopfsteg (62) in den Zwischenraum (73) mündende Entnahmeschrägen (85) zum Lösen der Gleitkörperansätze aus den Zwischenräumen (73) ausgebildet sind.

11. Kratzer nach einem der Ansprüche 1 bis 10, **dadurch gekennzeichnet, dass** die Gleiteinsätze (140) aus mehreren, fest miteinander verbundenen Kunststoffscheiben (148) bestehen.

12. Kratzer nach einem der Ansprüche 1 bis 11, **dadurch gekennzeichnet, dass** die Seitenstege (21; 71; 121) zu ihren Stegenden hin nach außen gewölbt verlaufen.

13. Kratzer nach einem der Ansprüche 1 bis 12, **dadurch gekennzeichnet, dass** der Abstand zwischen den Seitenstegen (21; 71) und die Breite des Zwischenraums (23; 73) zu den freien Stegenden (21A; 71A) hin zunimmt oder dass der Abstand zwischen den Seitenstegen (121; 171) und die Breite des Zwischenraums (123; 173) konstant ist.

14. Kratzer nach einem der Ansprüche 1 bis 13, **dadurch gekennzeichnet, dass** jeder Gleiteinsatz (90; 140) mittels eines separaten Sicherungsmittels (55; 105) als Arretiermittel an den Seitenstegen oder an einem Querschenkel der Halteabschnitte arretierbar ist oder arretiert ist.

15. Verwendung eines Gleiteinsatzes für einen Kratzer nach einem der Ansprüche 1 bis 14, wobei der Gleiteinsatz (40; 90; 140) aus Kunststoff besteht, spangenförmig ausgebildet ist, zwei Gleitkörperansätze bildende, an einem Mittelteil (46; 96; 146) verbundenen Spangenschenkeln (41, 42; 91, 92; 141, 142) aufweist, und lösbar in einem Zwischenraum zwischen metallischen Seitenstegen, die an Halteabschnitten (14; 64; 14; 164) des Kopfstegs eines Kratzers ausgebildet sind, befestigt wird.

## Claims

1. Scraper for a scraper chain conveyor, having a top web (12; 62; 112; 162), on which a chain attachment region for connecting the scraper to a scraper chain is configured, and having scraper wings (15; 65; 115; 165) for guiding the scraper on side profiles and a bottom of a scraper chain conveyor, wherein the scraper wings (15; 65; 115; 165) consist of a holding portion (14; 64; 114; 164), which is anchored to the metallic top web, and a plastics sliding insert (40; 90; 140; 190) for each scraper wing (15; 65; 115; 165), which plastics sliding insert is releasably fastenable to the holding portion (14; 64; 114; 164) by means of retaining means, **characterized in that** each holding portion (14; 64; 114) has two metallic side webs (21; 71; 121; 171) which are distanced apart by an interspace (23; 73; 123; 173), wherein the interspace (23; 73; 123) is divided into interspace portions by means of a transverse leg (22; 72; 122), and wherein each interspace portion is configured to receive a sliding body lug on the sliding inserts (40; 90; 140).

2. Scraper according to claim 1, **characterized in that** the holding portions (14; 64; 114; 164) are configured integrally on the top web (12; 62; 112; 162) and consist of the same material as the top web.

3. Scraper according to claim 1 or 2, **characterized in that** an insertion pocket (16) is configured on the bottom side of the top web (12; 62; 112; 162) between the holding portions (14; 64; 114; 164), and **in that** the insertion pocket (16) is closable off from below by means of a clamp (30; 80), the chain attachment region (13; 113) being configured between the bottom side of the top web and the top side of the clamp.

4. Scraper according to claim 3, **characterized in that** the holding portions (14; 64), on their rear sides (14') delimiting the insertion pocket (16), are provided with grooves (19) for the positive engagement of web portions (31) on the free clamp ends of the clamp (30).

5. Scraper according to one of claims 1 to 4, **characterized in that** the sliding insert (40) is of clasp-like configuration and, at mutually spaced ends of clasp legs (41, 42) which form the sliding body lugs and are connected at a middle part (46), is provided with locking protrusions (44, 45) as retaining means.

6. Scraper according to one of claims 1 to 5, **characterized in that** the sliding insert (90) is of clasp-like configuration and has two clasp legs (91, 92), which form the sliding body lugs and are connected at a middle part (96) and which are provided with transverse bores (97) for the penetration of locking pins as retaining means.

7. Scraper according to one of claims 1 to 6, **characterized in that** the sliding insert (140) is of clasp-like configuration and has two differently long clasp legs (141, 142), which are connected at a middle part (146) and form the sliding body lugs, the middle part (146) preferably being provided with a transverse bore (145) for the penetration of a locking pin as retaining means.

8. Scraper according to one of claims 1 to 7, **characterized in that** the clasp legs of the sliding inserts (40; 90; 140) diverge in a V-shape, the clasp-like sliding insert (40; 90; 140) being able to be slid onto the holding portion (14; 64; 114) with the free clasp leg ends to the fore and, in the fitted state, protruding at least outwards and downwards beyond the side webs (21; 71; 121).

9. Scraper according to claim 8, **characterized in that** the protrusion, at least downwards over the side webs (71), is sufficient for the sliding inserts (40; 90), in operational use, to be configured or provided as a single contact surface of the scraper wings with the conveyor floor (6).

10. Scraper according to one of claims 1 to 9, **characterized in that** removal bevels (85) which open out into the interspace (73) are configured on the top web (62) to release the sliding body lugs from the interspaces (73).

11. Scraper according to one of claims 1 to 10, **characterized in that** the sliding inserts (140) consist of a plurality of fixedly connected plastics sheets (148).

12. Scraper according to one of claims 1 to 11, **characterized in that** the side webs (21; 71; 121) run outwardly arched in the direction of their web ends.

13. Scraper according to one of claims 1 to 12, **characterized in that** the distance between the side webs (21; 71), and the width of the interspace (23; 73), increases in the direction of the free web ends (21A; 71A) or in that the distance between the side webs (121; 171), and the width of the interspace (123; 173), is constant.

14. Scraper according to one of claims 1 to 13 **characterized in that** each sliding insert (90; 140) is lockable or locked in place by means of a separate locking means (55; 105) as retaining means on the side webs or on a transverse leg of the holding portions.

15. Use of a sliding insert for a scraper according to one of claims 1 to 14, wherein the sliding insert (40; 90; 140) consists of plastic, is of clasp-like configuration, includes two clasp legs (41, 42; 91, 92; 141, 142) which form sliding body lugs and are connected at a middle part (46; 96; 146), and is releasably fastened in an interspace between metallic side webs configured on holding portions (14; 64; 14; 164) of the top web of a scraper.

## Revendications

1. Raclette pour convoyeur à chaîne à raclettes, comprenant une traverse de tête (12 ; 62 ; 112 ; 162) sur laquelle est formée une région d'attache de chaîne pour relier la raclette à une chaîne à raclettes et des ailes (15 ; 65 ; 115 ; 165) de raclette pour guider la raclette sur des profils latéraux et un fond d'un convoyeur à chaîne à raclettes, les ailes (15 ; 65 ; 115 ; 165) de raclette étant constituées d'une partie de retenue (14 ; 64 ; 114 ; 164) ancrée à la traverse de tête métallique et d'un insert de glissement en plastique (40 ; 90 ; 140; 190) pour chaque aile (15; 65; 115; 165) de raclette, l'insert de glissement en plastique pouvant être fixé de manière détachable sur la partie de retenue (14 ; 64 ; 114 ; 164) à l'aide de moyens d'arrêt, **caractérisée en ce que** chaque partie de retenue (14 ; 64 ; 114 ; 164) présente deux traverses latérales (21 ; 71 ; 121 ; 171) métalliques espacées l'une de l'autre d'un espace intermédiaire (23 ; 73 ; 123 ; 173), l'espace intermédiaire (23 ; 73 ; 123) étant subdivisé en parties d'espace intermédiaire au moyen d'une branche transversale (22 ; 72 ; 122) et chaque partie d'espace intermédiaire étant conçue pour recevoir une saillie de corps de glissement sur les inserts de glissement (40 ; 90 ; 140).

2. Raclette selon la revendication 1, **caractérisée en ce que** les parties de retenue (14 ; 64 ; 114 ; 164) sont conçues d'un seul tenant sur la traverse de tête (12 ; 62 ; 112 ; 162) et sont constituées du même matériau que la traverse de tête.

3. Raclette selon la revendication 1 ou 2, **caractérisée en ce qu'**une poche d'insertion (16) est formée entre les parties de retenue (14 ; 64 ; 114 ; 164) sur le côté inférieur de la traverse de tête (12 ; 62 ; 112 ; 162) et **en ce que** la poche d'insertion (16) peut être fermée par le bas au moyen d'un étrier (30 ; 80), la région d'attache de chaîne (13 ; 113) étant formée entre le côté inférieur de la traverse de pont et le côté supérieur de l'étrier.

4. Raclette selon la revendication 3, **caractérisée en ce que** les parties de retenue (14 ; 64) sont pourvues sur leurs côtés arrière (14') limitant la poche d'insertion (16) de rainures (19) pour l'engagement par complémentarité de forme de parties (31) de traverse aux extrémités libres de l'étrier (30).

5. Raclette selon l'une des revendications 1 à 4, **caractérisée en ce que** l'insert de glissement (40) est configuré en forme d'agrafe et est pourvu de protubérances de verrouillage (44, 45) comme moyens d'arrêt aux extrémités espacées l'une de l'autre de branches d'agrafe (41, 42) formant les saillies de corps de glissement, reliées à une partie centrale (46).

6. Raclette selon l'une des revendications 1 à 5, **caractérisée en ce que** l'insert de glissement (90) est configuré en forme d'agrafe et présente deux branches d'agrafe (91, 92) formant les saillies de corps de glissement, reliées à une partie centrale (96), lesquelles branches sont pourvues de trous transversaux (97) pour la pénétration de broches de sécurité comme moyens d'arrêt.

7. Raclette selon l'une des revendications 1 à 6, **caractérisée en ce que** l'insert de glissement (140) est configuré en forme d'agrafe et présente deux branches d'agrafe (141, 142) de longueur différente, reliées une partie centrale (146), formant les saillies de corps de glissement, la partie centrale (146) étant pourvue de préférence d'un trou transversal (145) pour la pénétration d'une broche de sécurité comme moyen d'arrêt.

8. Raclette selon l'une des revendications 1 à 7, **caractérisée en ce que** les branches d'agrafe des inserts de glissement (40 ; 90 ; 140) s'écartent en forme de V, l'insert de glissement (40 ; 90 ; 140) en forme d'agrafe pouvant être poussé avec les extrémités libres de branche d'agrafe vers l'avant sur la partie de retenue (14 ; 64 ; 114) et faisant saillie à l'état monté au moins vers l'extérieur et vers le bas au-delà des traverses latérales (21 ; 71 ; 121).

9. Raclette selon la revendication 8, **caractérisée en ce que** la saillie, au moins vers le bas au-delà des traverses latérales (71), est suffisante pour que les inserts de glissement (40 ; 90), lorsqu'ils sont en fonctionnement, soient configurés ou prévus comme unique surface de contact des ailes de raclette avec le fond (6) du convoyeur.

10. Raclette selon l'une des revendications 1 à 9, **caractérisée en ce que** des chanfreins d'enlèvement (85) débouchant dans l'espace intermédiaire (73) sont formés sur la traverse de tête (62) pour détacher les saillies de corps de glissement des espaces intermédiaires (73).

11. Raclette selon l'une des revendications 1 à 10, **caractérisée en ce que** les inserts de glissement (140) sont constitués de plusieurs plaques en plastique (148) reliées à demeure les unes aux autres.

12. Raclette selon l'une des revendications 1 à 11, **caractérisée en ce que** les traverses latérales (21 ; 71 ; 121) s'étendent cintrées vers l'extérieur en direction de leurs extrémités.

13. Raclette selon l'une des revendications 1 à 12, **caractérisée en ce que** la distance entre les traverses latérales (21 ; 71) et la largeur de l'espace intermédiaire (23 ; 73) augmentent en direction des extrémités libres (21A ; 71A) des traverses ou **en ce que** la distance entre les traverses latérales (121 ; 171) et la largeur de l'espace intermédiaire (123 ; 173) sont constantes.

14. Raclette selon l'une des revendications 1 à 13, **caractérisée en ce que** chaque insert de glissement (90 ; 140) peut être ou est arrêté sur les traverses latérales ou sur une branche transversale des parties de retenue à l'aide d'un moyen de sécurité (55; 105) séparé comme moyen d'arrêt.

15. Utilisation d'un insert de glissement pour une raclette selon l'une des revendications 1 à 14, l'insert de glissement (40 ; 90 ; 140) étant constitué de plastique, étant configuré en forme d'agrafe, présentant deux branches d'agrafe (41, 42 ; 91, 92 ; 141, 142) formant des saillies de corps de glissement, reliées à une partie centrale (46 ; 96 ; 146), et pouvant être fixé de manière détachable dans un espace intermédiaire entre des traverses latérales métalliques qui sont formées sur les parties de retenue (14 ; 64 ; 14 ; 164) de la traverse de tête d'une raclette.
